# EUROPÄISCHE PATENTSCHRIFT

(11) **EP 3 032 734 B1**
(45) Veröffentlichungstag und Bekanntmachung des Hinweises auf die Patenterteilung: **30.11.2022**
(21) Anmeldenummer: 15198492.9
(22) Anmeldetag: 08.12.2015
(51) Int. Cl.: H02P 27/08

(54) **VERFAHREN ZUM BETRIEB EINES UMRICHTERS SOWIE UMRICHTER**
METHOD FOR OPERATING A CONVERTER AND CONVERTER
PROCEDE DE FONCTIONNEMENT D'UN CONVERTISSEUR ET CONVERTISSEUR

(30) Priorität: 13.12.2014 DE 102014018664
(43) Veröffentlichungstag der Anmeldung: 15.06.2016
(73) Patentinhaber: Baumüller Nürnberg GmbH, 90482 Nürnberg (DE)
(72) Erfinder: LELKES, András, 90491 Nürnberg (DE); BAUMÜLLER, Andreas, 90482 Nürnberg (DE)
(74) Vertreter: FDST Patentanwälte

(56) Entgegenhaltungen:
- EP-A1- 2 133 251
- DE-A1-102008 025 446
- DE-A1-102008 025 596
- DE-A1-102010 050 383
- DE-B4-102008 025 596
- DE-B4-102010 050 383

## Beschreibung

Die Erfindung betrifft ein Verfahren zum Betrieb eines Umrichters mit einem Halbleiterschalter sowie einen Umrichter mit einem Halbleiterschalter.

Umrichter weisen üblicherweise eine Gleichrichterseite, einen Zwischenkreis und eine Wechselrichterseite auf. Die Gleichrichterseite ist elektrisch mit einem Versorgungsnetz verbunden, das eine Wechselspannung führt, beispielsweise eine Dreiphasenwechselspannung. Das Versorgungsnetz führt hierbei einen Wechselstrom, wobei unter Wechselstrom sowohl ein einphasiger Wechselstrom als auch ein mehrphasiger Wechselstrom, beispielsweise dreiphasiger Wechselstrom (Dreiphasenwechselstrom) verstanden wird, also ein sogenannter Drehstrom. Die Frequenz der Wechselspannung, mittels dessen der Umrichter gespeist wird, ist konstant und üblicherweise gleich 50 Hz oder 60 Hz. Die Wechselspannung wird mittels des Gleichrichters gleichgerichtet und in den Zwischenkreis eingespeist.

Der Zwischenkreis weist im Falle einer geregelten Gleichrichterseite üblicherweise eine konstante elektrische Spannung auf, so dass mittels des Gleichrichters die Wechselspannung in eine Gleichspannung transformiert wird. Andernfalls ist die elektrische Spannung des Zwischenkreises lastabhängig.

Die Gleichspannung des Zwischenkreises wird mittels des Wechselrichters erneut in eine elektrische Wechselspannung gewandelt, was zu einem Wechselstrom führt. Die Frequenz des auf diese Weise erzeugten elektrischen Wechselstroms entspricht der Frequenz einer mittels des Umrichters angetriebenen elektrischen Maschine. Üblicherweise wird mittels des Umrichters ein dreiphasiger Wechselstrom ausgegeben, wobei mittels jeder der Phasen eine der Phasen der elektrischen Maschine beaufschlagt wird. Folglich weisen die einzelnen Phasen einen Versatz zueinander von im Wesentlichen 120° auf.

Zur Erzeugung der Wechselspannung aus der Gleichspannung werden üblicherweise Halbleiterschalter verwendet, die meist in einer Brückenschaltung angeordnet sind. Sofern drei Phasen ausgegeben werden, sind die Halbleiter hierbei üblicherweise in einer B6-Schaltung miteinander elektrisch kontaktiert. Zur Erzeugung der Wechselspannung aus der näherungsweisen konstanten elektrischen Spannung des Zwischenkreises, werden die Halbleiterschalter derart angesteuert, dass ein pulsweitenmoduliertes Signal in die einzelnen Phasen eingespeist wird. Die Frequenz (Schaltfrequenz) korrespondiert hierbei zu den Zeitpunkten, zu denen der jeweilige Halbleiterschalter in einen elektrisch leitenden Zustand versetzt wird, wobei der Zeitpunkt der Ansteuerung des Halbleiterschalters in einen elektrisch nicht leitenden Zustand von der gewünschten Wechselspannung abhängt. Mit anderen Worten wird der Tastgrad zur Erzeugung der gewünschten Wechselspannung angepasst. Bei hinreichender elektrischer Trägheit der mittels des Umrichters angetriebenen elektrischen Maschine und einer vergleichsweise hohen Schaltfrequenz ist der resultierende Wechselstrom hinreichend geglättet und weist eine Sinusform auf.

Aufgrund der Ansteuerung der Halbleiterschalter, bei denen diese vergleichsweise schlagartig von einem elektrisch leitenden in einen elektrisch nicht leitenden Zustand überführt werden, liegt an diesen bei dem Schaltvorgang einerseits eine vergleichsweise hohe elektrische Spannung und ein vergleichsweise großer elektrischer Stromfluss vor, was zu einer vergleichsweise großen Verlustleistung führt. Infolgedessen, und um die thermische Belastung der Halbleiterschalter vergleichsweise gering zu halten, wird eine vergleichsweise niedrige Schaltfrequenz gewählt. Derartige Schaltfrequenzen sind für das menschliche Ohr wahrnehmbar, so dass ein längeres Arbeiten für Bedienpersonal des Umrichters und/oder der elektrischen Maschine vergleichsweise unangenehm ist. Auch ist bei einer vergleichsweise niedrigen Schaltfrequenz eine Ausbildung von Oberschwingungen innerhalb des Wechselstroms begünstigt, so dass eine Drehzahl der elektrischen Maschine nicht konstant ist.

Aus DE 10 2010 050 383 A1 ist eine pulsbreitenmodulierte (PWM) Gleichrichter- / Wechselrichtereinrichtung bekannt, bei der die PWM-Schaltfrequenz anhand eines Profils variiert wird. Die Frequenzvariation tritt als eine Funktion eines Motordrehmoments auf. Mittels zweiter Schaltfrequenzen wird eine Totzone definiert.

Aus DE 10 2008 025 446 A1 ist ein Hybridkraftfahrzeug bekannt. Das Kraftfahrzeug weist eine Anzahl an Elektromotoren auf, die mittels eines Umrichters mit einer Batterie gekoppelt sind. Die Motoren werden mittels einer Schaltfrequenz betrieben.

Aus DE 10 2008 025 596 A1 ist eine Bearbeitungsmaschine, insbesondere eine Werkzeugmaschine bekannt. Mittels einer Erfassung einer Maschinenschwingung wird ein Lagerschaden erfasst.

EP 2 133 251 A1 offenbart ein Verfahren zum Betrieb eines Umrichters, dessen Halbleiterschalter zur Ausgabe eines, insbesondere pulsweitenmodulierten, elektrischen Spannungs- oder Stromsignals mit einer Schaltfrequenz beaufschlagt wird, wobei die Schaltfrequenz abhängig von einem externer Parameter gewählt wird, wobei eine erste Schaltfrequenz oder eine zweite Schaltfrequenz gewählt wird, wobei die erste Schaltfrequenz größer als die zweite Schaltfrequenz ist, wobei als externer Parameter eine Drehzahl einer mittels des Umrichters angetriebenen elektrischen Maschine herangezogen wird, wobei bei einer ersten Drehzahl die erste Schaltfrequenz und bei einer zweiten Drehzahl die zweite Schaltfrequenz gewählt wird, wobei die erste Drehzahl kleiner als die zweite Drehzahl ist.

Der Erfindung liegt die Aufgabe zugrunde, ein besonders geeignetes Verfahren zum Betrieb eines Umrichters mit einem Halbleiterschalter sowie ein besonders geeignetes System anzugeben, wobei insbesondere eine akustische Belastung sowie vorteilhafterweise Schaltverluste und zweckmäßigerweise eine Ausbildung von Oberschwingungen verringert ist.

Hinsichtlich des Verfahrens wird diese Aufgabe durch die Merkmale des Anspruchs 1 und hinsichtlich des Systems durch die Merkmale des Anspruchs 4 erfindungsgemäß gelöst. Vorteilhafte Weiterbildungen und Ausgestaltungen sind Gegenstand der jeweiligen Unteransprüche.

Der Umrichter weist zumindest einen Halbleiterschalter auf, und insbesondere eine Anzahl von Halbleiterschaltern, beispielsweise vier oder sechs. Diese sind zweckmäßigerweise zu einer Brückenschaltung verschaltet. Der Umrichter ist beispielsweise als 2-Level- oder 3-Level-Umrichter ausgestaltet, weist also eine Gleichspannungsseite mit zwei oder drei elektrischen Potentialen auf, die mittels der Halbleiterschalter jeweils gegen eine Phase führbar sind, mittels derer zweckmäßigerweise eine elektrische Maschine angetrieben wird. Insbesondere umfasst der Umrichter drei derartige Phasen, sofern die Halbleiterschalter zu einer Brücken-6 (B6-)Schaltung verschaltet sind. Der Halbleiterschalter ist bevorzugt ein Leistungshalbleiterschalter.

Mittels des bzw. der Halbleiterschalter wird ein Spannungs- und/oder Stromsignal generiert, das in die jeweilige Phase eingespeist wird. Hierfür wird der oder die Halbleiterschalter mit einer Schaltfrequenz beaufschlagt, die vorzugsweise konstant, jedoch zumindest im Wesentlichen konstant ist, also näherungsweise konstant ist. Insbesondere ist das Spannungs- bzw. Stromsignal ein pulsweitenmoduliert. Folglich wird mittels des Halbleiterschalters das pulsweitenmodulierte elektrischen Spannungs- bzw. Stromsignal ausgegeben. Mit anderen Worten wird der oder die Halbleiterschalter mittels der Schaltfrequenz angesteuert, wobei vorzugsweise der Zeitpunkt des Versetzens des Halbleiterschalters in einen elektrisch leitenden oder einen elektrisch nicht leitenden Zustand die Schaltfrequenz bestimmt. Der jeweils verbleibende Zeitpunkt, also das Versetzen des Halbleiterschalters in einen nicht leitenden bzw. in den leitenden Zustand wird mittels eines Tastverhältnisses eingestellt, das in Abhängigkeit des jeweils gewünschten Strom- bzw. Spannungssignals gewählt wird.

Die Schaltfrequenz wird abhängig von einem externen Parameter gewählt. Mit anderen Worten wird zunächst ein externer Parameter bestimmt und in Abhängigkeit des ermittelten externen Parameters die Schaltfrequenz gewählt. Somit besteht ein funktionaler Zusammenhang zwischen dem externen Parameter und der Schaltfrequenz. Der externe Parameter ist unabhängig von dem Aufbau sowie dem Betrieb des Umrichters und wird geeigneterweise außerhalb des Umrichters ermittelt. Mit anderen Worten ist der externe Parameter unabhängig von dem Betriebszustand des Umrichters selbst. Die Wahl der Schaltfrequenz erfolgt während der Leistungsabgabe des Umrichters, also nach dessen Erstellung und Fertigung. Auf diese Weise wird die entstehende Verlustleistung sowie die akustische Belastung der Umgebung des Umrichters von einem externen Parameter bestimmt, sodass bei geeigneter Wahl des externen Parameters sowohl eine geringe Umgebungsbelastung als auch verringerte Verlustleistung, jeweils abhängig von dem externen Parameter, realisiert werden können.

Mittels des Umrichters wird bevorzugt ein Elektromotor betrieben, wie ein Synchron oder Asynchronmotor. Geeigneterweise ist der Umrichter Bestandteil einer Industrieanlage. Insbesondere weist der Umrichter eine maximale Leitungsabgabe zwischen 700 W und 500 kW auf. Zweckmäßigerweise ist die Leitungsabgabe größer oder gleich 1 kW, 5 kW, 10 kW, 50 kW, 100 kW oder 200 kW. Zum Beispiel ist die Leitungsabgabe kleiner oder gleich 400 kW, 250 kW, 100 kW, 50 kW, 15 kW oder 2 kW.

Zweckmäßigerweise wird die Schaltfrequenz kontinuierlich mit dem externen Parameter angepasst. Mit anderen Worten besteht ein funktioneller Zusammenhang zwischen der Schaltfrequenz und dem externen Parameter, wobei die hierzu verwendete Funktion stetig ist. Auf diese Weise ist einerseits eine Belastung der Komponenten des Umrichters aufgrund des erfolgenden Wechsels vermieden und andererseits wird ein gefälliger akustischer Eindruck auf etwaige vorhandene Personen ausgeübt. Alternativ hierzu wird die Schaltfrequenz in diskreten Stufen angepasst. Mit anderen Worten ist die den funktionellen Zusammenhang definierende Funktion nicht stetig, sondern weist Sprungstellen auf. Beispielsweise weist der Umrichter zwei, drei, vier, fünf oder sechs unterschiedliche Schaltfrequenzen auf. Auf diese Weise ist eine Ansteuerung der Halbleiterschalter vereinfacht. Insbesondere ist zur Ermittlung des jeweiligen Tastverhältnisses keine vergleichsweise komplizierte Berechnung erforderlich.

Als externer Parameter wird ein Umgebungsparameter herangezogen, der insbesondere zeitlich veränderlich ist. Auf diese Weise sind die von dem Umrichter ungewollten emittierten elektromagnetischen Wellen oder Schallwellen stets auf die Umgebung angepasst, auch wenn sich die Umgebung im Vergleich zu dem Zeitpunkt der ursprünglichen Montage ändern sollte. Beispielsweise wird der zeitliche Mittelwert des Umgebungsparameters gebildet, und dieser als externer Parameter herangezogen. Beispielsweise wird als Mittelwert ein gleitender Mittelwert verwendet, zu dessen Berechnung die zeitlich letzten zwei, drei, vier, fünf, sechs, ..... zehn, fünfzehn, zwanzig, fünfzig, hundert ermittelten Umgebungsparameter herangezogen werden. Beispielsweise werden mehr oder weniger als diese Anzahl der Umgebungsparameter herangezogen.

Geeigneterweise werden die Umgebungsparameter hinsichtlich deren Erfassungszeitpunkts gewichtet, beispielsweise gleich, exponentiell oder linear. Vorzugsweise werden die Umgebungsparameter zu fest vorgegebenen Zeitpunkten erfasst, wobei die auf diese Weise gebildeten Zeitintervalle vorzugsweise konstant sind. Insbesondere ist das Zeitintervall größer oder gleich 1 µs, 2 µs, 5 µs, 10 µs, 15 µs, 100 µs, 1 ms, 2 ms, 5 ms, 10 ms, 50 ms, 100 ms, 200 ms, 500 ms, 1 s, 2 s, 5 s, 10 s. Vorzugsweise sind die Zeitintervalle kleiner oder gleich 15 s, 10 s, 5 s, 1 s, 800 ms, 600 ms, 300 ms, 200 ms, 90 ms, 70 ms, 20 ms, 7 ms, 3 ms, 900 µs, 700 µs, 400 µs, 150 µs, 90 µs, 40 µs, 15 µs, 7 µs oder 5 µs. Aufgrund der Mittelwertbildung ist eine Hysterese geschaffen, sodass einerseits eine Belastung der Bauelemente des Umrichters sowie hiermit elektrisch kontaktierter Vorrichtungen verringert ist, wie eine elektrische Maschine, oder diese mit dem Umrichter elektrisch verbindende Leitungen. Andererseits ist ein akustischer Eindruck vermieden, der aufgrund eines zeitlich schwankenden Umgebungsparameters um einen bestimmten Wert hervorgerufen würde, und der von etwaigem Bedienpersonal als Fehlfunktion interpretiert werden könnte.

Als Umgebungsparameter und somit als externer Parameter eine Drehzahl einer mittels des Umrichters angetriebenen elektrischen Maschine herangezogen. Mit anderen Worten ist der externe Parameter, in Abhängigkeit dessen die Schaltfrequenz gewählt wird, die Drehzahl oder aber ein Mittelwert der Drehzahl der elektrischen Maschine. Beispielsweise wird hierfür eine Ist-Drehzahl der elektrischen Maschine herangezogen, so dass die Schaltfrequenz vergleichsweise genau auf den aktuellen Zustand der elektrischen Maschine angepasst wird. Auch ist auf diese Weise eine Anpassung im Wesentlichen ohne Zeitversatz ermöglicht.

In einer Alternative hierzu wird die Soll-Drehzahl als Drehzahl herangezogen, anhand derer die Schaltfrequenz gewählt wird. Die Soll-Drehzahl bezeichnet hierbei die Drehzahl, auf die die elektrische Maschine geregelt oder gesteuert wird. Mit anderen Worten handelt es sich bei der Soll-Drehzahl um einen extern vorgegebenen Wert, der beispielsweise eine Zeitspanne vor dem Zeitpunkt bekannt wird, ab dem die Regelung auf diesen erfolgt. Mit anderen Worten ist beispielsweise bereits 5 Minuten vor Beginn der Regelung auf einen veränderten Soll-Drehzahlwert die Veränderung bekannt. Folglich ist es ermöglicht, bereits vor Beginn der Regelung oder Steuerung der elektrischen Maschine auf die Soll-Drehzahl eine geeignete Ansteuerung des Halbleiterschalters mit der veränderten Schaltfrequenz zu berechnen, die jedoch erst ab Änderung der Soll-Drehzahl eingesetzt wird. Beispielsweise erfolgt eine Änderung der Soll-Drehzahl kontinuierlich. Mit anderen Worten ist der Verlauf der Soll-Drehzahl stetig. Hierfür wird geeigneterweise eine Rampenfunktion zur Anpassung der Soll-Drehzahl verwendet. Mit anderen Worten wird ausgehend von einem ersten Niveau die Soll-Drehzahl mittels einer linearen Funktion, der Rampenfunktion, auf ein zweites Niveau angepasst. Auf diese Weise entstehen keine störenden akustischen Geräusche aufgrund einer sprunghaften Änderung der Soll-Drehzahl, falls die elektrische Maschine beschleunigt oder abgebremst werden soll.

Bei einer ersten Drehzahl wird eine erste Schaltfrequenz und bei einer zweiten Drehzahl eine zweite Schaltfrequenz gewählt, wobei die erste Drehzahl kleiner als die zweite Drehzahl ist, und wobei die erste Schaltfrequenz größer als die zweite Schaltfrequenz ist. Mit anderen Worten wird bei der kleineren ersten Drehzahl im Vergleich zur zweiten Drehzahl eine größere Schaltfrequenz gewählt. Beispielsweise erfolgt die Anpassung kontinuierlich. Folglich wird desto größer die Schaltfrequenz gewählt, je kleiner die Drehzahl der elektrischen Maschine ist. Mit anderen Worten ist die Schaltfrequenz invers proportional zur Drehzahl der elektrischen Maschine. Alternativ wird die Schaltfrequenz diskret angepasst, wobei beispielsweise ab einer Grenz-Drehzahl, die zwischen der ersten und der zweiten Drehzahl liegt, im Wesentlichen schlagartig von der ersten zur zweiten Schaltfrequenz bzw. von der zweiten Schaltfrequenz zur ersten Schaltfrequenz umgeschaltet wird. Mit anderen Worten wird bei einer Drehzahl unterhalb der Grenz-Drehzahl die erste Schaltfrequenz zur Ansteuerung des Halbleiterschalters und bei einer Drehzahl oberhalb der Grenz-Drehzahl, also einer elektrischen Maschine, die schneller als die Grenz-Drehzahl rotiert, die zweite Schaltfrequenz zur Ansteuerung des Halbleiterschalters herangezogen.

Beispielsweise ist die erste Schaltfrequenz größer oder gleich 15 kHz, 18 kHz, 20 kHz, 25 kHz, 30 kHz und zweckmäßigerweise kleiner oder gleich 30 kHz, 25 kHz oder 20 kHz. Auf diese Weise ist bei der ersten Drehzahl das Schalten der Halbleiterschalter mit dem menschlichen Ohr nicht wahrnehmbar, sofern die elektrische Maschine mit einer vergleichsweis geringen Drehzahl dreht. Bei dieser liegt meist keine vollständige Belastung der elektrischen Maschine vor, beispielsweise bei einem Anlauf und/oder einer Einstellung der elektrischen Maschine. In diesem Fall ist die mittels der elektrischen Maschine erstellte Geräuschbelastung vergleichsweise gering, so dass in Verbindung mit der verringerten akustischen Belastung durch den Umrichter etwaiges Bedienpersonal nicht belastet wird. Die zweite Schaltfrequenz ist beispielsweise kleiner oder gleich 15 kHz, 10 kHz, 8 kHz oder 5 kHz. Beispielsweise ist die zweite Schaltfrequenz größer 2 kHz, 4 kHz oder 7 kHz. Für das Bedienpersonal ist hierbei die Ansteuerung des Halbleiterschalters wahrnehmbar, jedoch aufgrund der erhöhten Drehzahl der elektrischen Maschine wird dies übertönt. Zudem ist bei der erhöhten Drehzahl meist die elektrische Maschine ausgelastet und wird zum Antrieb von beispielsweise Werkzeugen oder dergleichen herangezogen. In diesem Fall ist aus Sicherheitsgründen meist kein Bedienpersonal in der Umgebung des Umrichters und der elektrischen Maschine anwesend. Zudem sind in diesem Fall aufgrund der verringerten Schaltfrequenz die entstehenden Verluste reduziert, da zur Einstellung der zweiten Drehzahl ein vergleichsweise hoher Stromfluss durch den Halbleiterschalter benötigt wird. Dahingegen wird bei der ersten Drehzahl lediglich ein vergleichsweise geringer elektrischer Stromfluss benötigt, weswegen die entstehenden Verluste trotz der erhöhten Schaltfrequenz vergleichsweise gering sind.

Ferner wird als Umgebungsparameter und somit als externer Parameter eine Amplitude einer Schallwelle herangezogen. Mit anderen Worten wird die Umgebung des Umrichters auf das Vorhandensein von Schallwellen überprüft und deren Amplitude ermittelt. Mit andren Worten wird die Schaltfrequenz in Abhängigkeit der Amplitude der erfassten Schallwelle ermittelt oder aber anhand eines zeitlichen Mittelwerts der Amplitude. Beispielsweise wird hierbei stets eine Schallwelle mit bestimmter Frequenz überwacht und deren Amplitude ermittelt. Alternativ hierzu wird diejenige Schallwelle herangezogen, die die größte Amplitude aufweist. Beispielsweise wird hierfür ein Schallspektrum aufgenommen und mittels einer Fouriertransformation die Schallwelle mit der größten Amplitude ermittelt. In einer weiteren Alternative korrespondiert die Schallwelle zu einer bestimmten Frequenz, und das Wählen der Schaltfrequenz erfolgt in Abhängigkeit der Anwesenheit dieser Schallwelle, also ob die Amplitude dieser Schallwelle gleich Null (0) oder verscheiden hiervon ist. Alternativ werden die Amplituden eines bestimmten Spektrums aufsummiert, und vorzugsweise gewichtet, wobei die Wichtung entsprechend der Sensitivität des menschlichen Ohrs erfolgt. Mit anderen Worten wird als Umgebungsparameter ein Geräuschpegel herangezogen. Beispielsweise erfolgt die Überwachung der Amplituden von Schallwellen mit einer Frequenz zwischen 0,02 und 20 kHz, also in dem Bereich, in dem das menschliche Ohr Geräusche wahrnimmt. Insbesondere wird die Schallwelle mittels eines Mikrofons oder aber eines Schwingungssensors erfasst, wobei das erfasste Signal beispielsweise mittels eines Filters, beispielsweise eines Tiefpass- oder aber Hochpass-Filters gefiltert wird. Alternativ ist die Schallwelle ein Schwingungssignal oder ein Beschleuni-oder ein Beschleunigungssignal, welches beispielsweise mittels eines Schwingungssensors erfasst wird. Mit anderen Worten werden bestimmte Vibrationen gemessen, die zu der Schallwelle korrespondieren. Unter Schallwell wird somit folglich auch ein Körperschall verstanden.

Beispielsweise wird die Schallwelle innerhalb des Umrichters erfasst, beispielsweise mittels eines auf einer Reglerleiterplatte montierten Sensors. Alternativ hierzu wird die Schallwelle innerhalb einer mittels des Umrichters angetriebenen elektrischen Maschine erfasst, wofür beispielsweise ein Schwingungssensor innerhalb der elektrischen Maschine platziert wird. Beispielsweise wird das Messsignal kabellos oder aber mittels eines Sensorkabels oder einer Sensorleitung übertragen, die beispielsweise in eine Leitung integriert ist, mittels derer die elektrische Maschine bestromt wird.

Zweckmäßigerweise wird bei einer ersten Amplitude die erste Schaltfrequenz und bei einer zweiten Amplitude die zweite Schaltfrequenz gewählt, wobei die erste Amplitude kleiner als die zweite Amplitude und die erste Schaltfrequenz größer als die zweite Schaltfrequenz ist. Mit anderen Worten ist die Schaltfrequenz invers zur Amplitude, wobei die Anpassung beispielsweise kontinuierlich oder aber stufenweise erfolgt. Folglich wird bei einer vergleichsweise hohen akustischen Belastung aufgrund der vergleichsweise großen zweiten Amplitude eine geringe zweite Schaltfrequenz gewählt. Aufgrund der vergleichsweise starken Geräuschbelastung ist die Schaltfrequenz des Halbleiterschalters im Wesentlichen durch das menschliche Ohr nicht wahrnehmbar. Folglich wird der Umrichter mit vergleichsweise geringen Verlusten betrieben, was zu einer geringeren thermischen Belastung des Halbleiterschalters führt.

Dahingegen wird in einer vergleichsweise stillen Umgebung, also falls die Schallwelle die vergleichsweise geringe erste Amplitude aufweist, eine große erste Schaltfrequenz gewählt, die zweckmäßigerweise nicht für das menschliche Ohr wahrnehmbar ist. Beispielsweise entspricht die erste Schaltfrequenz der bei der ersten Drehzahl gewählten Schaltfrequenz und die zweite Schaltfrequenz der bei der zweiten Drehzahl gewählten Schaltfrequenz. Zusammenfassend wird folglich bei einem größeren Geräuschpegel das Kommutierungsgeräusch des Umrichters, das aufgrund der Beaufschlagung des Halbleiterschalters mittels der Schaltfrequenz entsteht, durch die Umgebungsgeräusche übertönt, was die Leistungsfähigkeit des Umrichters erhöht und/oder dessen Kühlbedarf reduziert. Dahingegen wird bei einem vergleichsweise geringen Geräuschpegel aufgrund der erhöhten ersten Schaltfrequenz keine als störend empfundene Kommutierungsgeräusche mittels des Umrichters in die Umgebung emittiert. Beispielsweise ist die erste Schaltfrequenz größer oder gleich 15 kHz, 18 kHz, 20 kHz, 25 kHz, 30 kHz und zweckmäßigerweise kleiner oder gleich 30 kHz, 25 kHz oder 20 kHz. Die zweite Schaltfrequenz ist insbesondere kleiner oder gleich 15 kHz, 10 kHz, 8 kHz oder 5 kHz. Beispielsweise ist die zweite Schaltfrequenz größer 2 kHz, 4 kHz oder 7 kHz.

Beispielsweise wird die Beaufschlagung der Halbleiterschalter beendet, falls die Amplitude der Schallwelle oberhalb einer dritten Amplitude ist. Alternativ oder in Kombination hierzu wird die Beaufschlagung der Halbleiterschalter mit der Schaltfrequenz beendet, falls die erfasste Schallwelle eine Frequenz aufweist, die oberhalb einer Grenzfrequenz ist. Alternativ oder in Kombination hierzu wird die Beaufschlagung der Halbleiterschalter beendet, falls die Frequenz unterhalb einer zweiten Grenzfrequenz ist. Mit anderen Worten werden die Halbleiterschalter nicht angesteuert, falls eine Schallwelle mit einer bestimmten Frequenz erfasst wird, die außerhalb eines zu erwartenden Bereichs liegt. Eine derartige Schallwelle oder eine derartige Amplitude liegt insbesondere dann vor, wenn entweder der Umrichter oder die elektrische Maschine einen Defekt aufweisen, wie einen Lagerschaden.

In einer Ausgestaltung die nicht Teil der Erfindung ist, wird das den Umrichter umgebende Schallspektrum überwacht und auf das Vorhandensein einer bestimmten Schallwelle oder aber auf das Überschreiten einer Amplitude, also eines bestimmten Lautstärkegrenzwerts, hin überwacht. Sofern dies vorliegt, wird dies als Hinweis auf eine Beschädigung des Umrichters und/oder der elektrischen Maschine herangezogen. Mit anderen Worten wird die akustische Überwachung der Umgebung des Umrichters und/oder der elektrischen Maschine hinsichtlich des Vorhandenseins einer bestimmten Schallwelle, die entweder eine Amplitude größer als die dritte Amplitude oder eine Frequenz oberhalb einer ersten Grenzfrequenz oder unterhalb einer zweiten Grenzfrequenz aufweist, als Bedingung für die Annahme eines Vorhandenseins eines Defekts oder einer Beschädigung des Umrichters bzw. der elektrischen Maschine herangezogen wird.

In der Erfindung wird bei einer erhöhten Belastung des Umrichters, aufgrund einer vergleichsweise hohen Leistungsanforderung, die Schaltfrequenz des Umrichters gesperrt. Mit anderen Worten wird die Anpassung der Schaltfrequenz in Abhängigkeit des externen Parameters beendet, sofern die Leistungsanforderung an den Umrichter eine bestimmte vorgegebene Leistungsanforderung überschreitet. Insbesondere wird die zweite Schaltfrequenz zur Ansteuerung der Halbleiterschalter gewählt oder aber eine Schaltfrequenz, die kleiner als die zweite Schaltfrequenz ist. Alternativ oder in Kombination hierzu wird bei Überschreiten einer Umgebungstemperatur die Anpassung der Schaltfrequenz an den externen Parameter beendet. Mit anderen Worten wird bei einer erhöhten Umgebungstemperatur vorzugsweise die zweite Schaltfrequenz gewählt, unabhängig von der Drehzahl und/oder der Amplitude der Schallwelle, sofern diese als Umgebungsparameter herangezogen werden.

Der Umrichter weist einen Halbleiterschalter auf, der zur Ausgabe eines pulsweitenmodulierten elektrischen Spannungs- oder Stromsignals mit einer Schaltfrequenz beaufschlagt ist. Hierbei ist die Schaltfrequenz abhängig von einem externen Parameter gewählt. Der Halbleiterschalter ist beispielsweise ein IGBT, ein GTO, ein Thyristor, ein IGCT, ein MOSFET oder ein sonstiger Feldeffekttransistor. Zweckmäßigerweise umfasst der Umrichter vier oder sechs derartige Halbleiterschalter, die insbesondere in einer Brückenschaltung miteinander verschaltet sind. Mittels des Umrichters wird geeigneterweise eine elektrische Maschine betrieben, insbesondere ein Elektromotor. Der Elektromotor ist beispielsweise ein Innenläufer- oder ein Außenläufer-, ein Gleichstrommotor, ein Asynchronmotor, ein bürstenloser Gleichstrommotor, ein Reluktanzmotor oder weist beispielsweise Permanentmagneten auf. Alternativ hierzu ist der Elektromotor ein fremd erregter Synchronmotor. Beispielsweise ist der Umrichter ein 2-Level-Umrichter, ein 3-Level-Umrichter oder ein Mehr-Level-Umrichter oder Direkt-Umrichter, auch Matrix-Umrichter genannt. Der Umrichter ist bevorzugt Bestandteil einer Industrieanlage.

Nachfolgend wird ein Ausführungsbeispiel der Erfindung anhand einer Zeichnung näher erläutert. Darin zeigen:
- Fig. 1: schematisch eine mittels eines Umrichters betriebene elektrische Maschine,
- Fig. 2a: ein pulsweitenmoduliertes Spannungssignal mit einer zweiten Schaltfrequenz,
- Fig. 2b: das pulsweitenmodulierte Spannungssignal mit einer ersten Schaltfrequenz,
- Fig. 3: schematisch ein Verfahren zum Betrieb des Umrichters,
- Fig. 4: den funktionalen Zusammenhang zwischen einer Drehzahl der elektrischen Maschine und der Schaltfrequenz des Umrichters, und
- Fig. 5: ein Frequenzspektrum von Schallwellen.

Einander entsprechende Teile sind in allen Figuren mit den gleichen Bezugszeichen versehen.

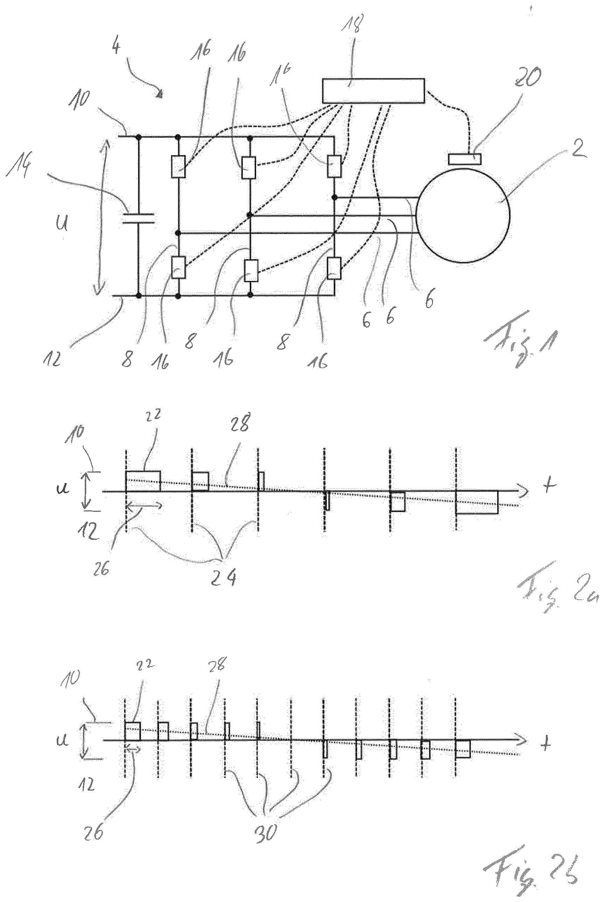

In Fig. 1 ist eine elektrische Maschine 2 dargestellt, die mittels eines Umrichters 4 betrieben ist. Die elektrische Maschine 2 ist dreiphasig. Mit anderen Worten wird die elektrische Maschine 2 mittels dreier Leitungen 6 bestromt, von denen jede mit einem Brückenzweig 8 des Umrichters elektrisch kontaktiert ist. Mittels der zueinander parallel geschalteten Brückenzweige 8 ist ein positiver Pol 10 elektrisch mit einem negativen Pol 12 des Umrichters 4 kontaktiert, die zueinander eine im Wesentlichen konstante elektrische Gleichspannung U in Höhe von 1200V aufweisen. Dies wird mittels eines Zwischenkreiskondensators 14 sichergestellt, der parallel zu den einzelnen Brückenzweigen geschalten ist. Jeder der Brückenzweige umfasst zwei in Reihe geschaltete Halbleiterschalter 16, jeweils in Form eines IGBTs. In einer Alternative hierzu ist zu dem IGBT parallel eine Freilaufdiode geschaltet. Die Kontaktierung der jeweiligen Leitung 6 erfolgt zwischen den beiden Halbleiterschaltern des jeweiligen Brückenzweigs 8.

Jeder der Halbleiterschalter 16 ist signaltechnisch mit einer Steuereinheit 18 gekoppelt, wobei das Gate des jeweiligen Halbleiterschalters 16 elektrisch mit der Steuereinheit 18 kontaktiert ist. Mit der Steuereinheit 18 ist ferner ein Sensor 20 gekoppelt. Die Kopplung erfolgt beispielsweise kabellos oder aber mittels eines Kabels, das insbesondere die drei Leitungen 6 umfasst. Mit anderen Worten wird die elektrische Maschine 2 mittels lediglich eines einzelnen Kabels mit dem Umrichter 4 gekoppelt, wobei hier einerseits die Spannungssignale mittels der Leitungen 6 und die Sensorsignale übertragen werden. Der Sensor 20 ist entweder ein Mikrofon oder ein Schwingungssensor. In einer weiteren Alternative hierzu wird mittels des Sensors 20 eine Ist-Drehzahl der elektrischen Maschine 2 überwacht.

In Fig. 2a ist der zeitliche Verlauf eines pulsweitenmodulierten Spannungssignals 22 dargestellt, das mittels einer der Leitungen 6 geführt wird, falls die Halbleiterschalter 16 des der Leitung 6 zugeordneten Brückenzweiges 8 mittels der Steuereinheit 18 mit einer zweiten Schaltfrequenz 24 angesteuert werden. Der in Fig.1 gezeigte Umrichter 4 ist hierbei zu einem 3-Level Umrichter abgewandelt. Mit anderen Worten existiert ein Mittenpotential, gewöhnlicherweise 0V, gegen das die Leitungen 6 mittels weitere, in Fig. 1 nicht gezeigter, Halbleiterschalter 16 führbar ist. Zu Beginn jedes mittels der zweiten Schaltfrequenz 24 definierten Zeitpunkts wird einer der beiden Halbleiterschalter 16 in einen elektrisch leitenden Zustand versetzt und nach einer Zeitspanne 26 erneut in den elektrisch nicht leitenden Zustand versetzt. Mit anderen Worten wird mittels des Umrichters 4 ein pulsweitenmoduliertes Spannungssignal 22 ausgegeben, das entweder das elektrische Potential des positiven Pols 10 des negativen Pols 12 oder das elektrische Potential des Mittenpotentials aufweist. Aufgrund der elektrischen Trägheit der elektrischen Maschine 2 ergibt sich in diesem Beispiel ein im Wesentlichen linearer elektrischer Spannungsverlauf 28.

In Fig. 2b ist der elektrische Spannungsverlauf 28 dargestellt, falls die Halbleiterschalter 16 mit einer ersten Schaltfrequenz 30 angesteuert werden, die dem Doppelten der zweiten Schaltfrequenz 24 entspricht. Hierbei sind die Zeitspannen 26 ebenfalls verkürzt. Aufgrund der im Wesentlichen doppelten Anzahl an Schaltvorgängen mittels der jeweiligen Halbleiterschalter 16 ist aufgrund der im Wesentlichen konstanten Gleichspannung U die Verlustleistung im Wesentlichen verdoppelt. Bei den in den in Fig. 2a und 2b dargestellten elektrischen Spannungssignalen 22 ist der in Fig. 1 gezeigte Umrichter 4 zu einem 3-Level Umrichter 4 abgewandelt. Mit anderen Worten existiert ein Mittenpotential, gewöhnlicherweise 0V, gegen das die Leitungen 6 mittels weitere, in Fig. 1 nicht gezeigter, Halbleiterschalter 16 führbar ist. Sofern der in Fig. 1 gezeigte Umrichter 4 verwendet wird, weisen die in den Fig. 2a und 2b dargestellten elektrischen Spannungssignale 22 lediglich zwei unterschiedliche Potentiale auf, nämlich entweder das elektrische Potential des positiven Pols 10 oder des negativen Pols 12, anstatt der gezeigten drei.

In einer weiteren Ausgestaltungsvariante der Erfindung werden die Halbleiterschalter 16 zur Ausgabe eines pulsweitenmodulierten elektrischen Stromsignals angesteuert. Mit anderen Worten entspricht das den in Fig. 2a und 2b dargestellte elektrische Spannungssignal 22 dem elektrischen Stromsignal. Hierfür ist der Umrichter 4 in geeigneter Weise abgewandelt, umfasst jedoch weiterhin die Halbleiterschalter 16.

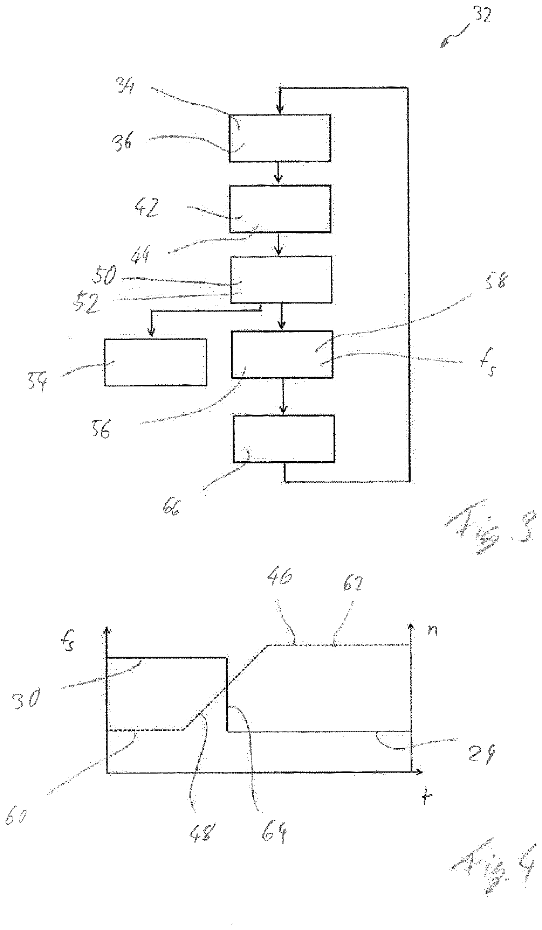

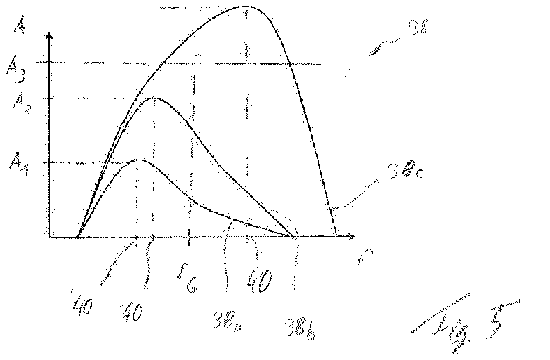

In Fig. 3 ist ein Verfahren 32 zum Betrieb des Umrichters 4 in einem zeitlichen Flussdiagramm dargestellt. In einem ersten Arbeitsschritt 34 wird ein Umgebungsparameter 36 des Umrichters 4 erfasst. Der Umgebungsparameter 36 ist je nach Ausgestaltung des Sensors 20 eine Ist-Drehzahl der elektrischen Maschine 2 oder mittels des Sensors 20 wird ein Frequenzspektrum 38 von Schallwellen erfasst, wie in Fig. 5 beispielhaft dargestellt ist. Der Umgebungsparameter 36 ist in diesem Fall eine einzige Amplitude A einer Schallwelle 40 oder aber die Gesamtheit aller Amplituden A also ein Geräuschpegel. Hierfür wird das Frequenzspektrum 38 um die Empfindlichkeit des menschlichen Ohrs bereinigt. In Fig. 5 ist ein erstes Frequenzspektrum 38a, ein zweites Frequenzspektrum 38b sowie ein drittes Frequenzspektrum 38c gezeigt. Mit anderen Worten wird das mittels des Mikrofons 20 bzw. Schallsensors 20 aufgenommene Schallspektrum fouriertransformiert und jeder Frequenz der Schallwelle 40 je ein Amplitude A zugeordnet. Innerhalb des jeweiligen Frequenzspektrums 38a, 38b, 38c wird in einer Alternative die Schallwelle mit der größten Amplitude A als die Schallwelle 40 herangezogen. Sofern der Geräuschpegel mittels eines geeigneten Sensors 20 aufgenommen wird, entfällt die Fouriertransformation, was das Verfahren 32 beschleunigt. In einer weiteren Ausführungsform wird als Umgebungsparameter 36 eine Drehzahl n der elektrischen Maschine 2 herangezogen. Hierbei ist der Sensor 20 zur Erfassung der Drehzahl n ertüchtigt.

In einem zweiten Arbeitsschritt 42 wird ein Mittelwert 44 der Umgebungsparameter 36 gebildet, wobei ein gleitender Mittelwert herangezogen wird. In einer weiteren Alternative wird eine Soll-Drehzahl 46 als Umgebungsparameter 36 herangezogen. In diesem Fall unterbleibt der zweite Arbeitsschritt 42 und die Mittelwertbildung. Jedoch wird die Soll-Drehzahl 46 jeweils mittels einer Rampenfunktion 48 angepasst. Mit anderen Worten wird, wie in Fig. 4 gezeigt, bei einer zeitlichen Änderung der Soll-Drehzahl 46 diese mittels einer linearen Funktion verändert, was u.a. die mechanische Belastung der elektrischen Maschine 2 vermindert.

In einem dritten Arbeitsschritt 50 wird der Umgebungsparameter 36 oder der Mittelwert 44 mit einem Grenzwert 52 verglichen. Dieser ist entweder eine dritte Amplitude A₃ oder aber eine Grenzfrequenz f_{G}. Sofern die Schallwelle 40 bzw. deren Mittelwert 44 eine Frequenz größer als die Grenzfrequenz f_{G} oder eine Amplitude A größer als die dritte Amplitude A₃ aufweist, oder aber die Drehzahl n größer als eine Grenzdrehzahl ist, wird ein vierter Arbeitsschritt 54 ausgeführt, bei dem die Beaufschlagung der Halbleiterschalter 16 beendet wird. Hierbei werden sämtliche Halbleiterschalter 16 in einen elektrisch nicht leitenden Zustand versetzt und folglich eine Bestromung der elektrischen Maschine 2 beendet. Falls diese Bedingung nicht erfüllt ist, wird ein fünfter Arbeitsschritt 56 ausgeführt, bei dem der Mittelwert 44 oder die Soll-Drehzahl 46 als externer Parameter 58 herangezogen wird. Anhand des externen Parameters 58 wird die Schaltfrequenz f_{S} bestimmt, mittels derer die Halbleiterschalter 16 angesteuert werden. Hierbei werden bei einer ersten Amplitude A₁ die erste Schaltfrequenz 30 und bei einer zweiten Amplitude A₂ der jeweiligen Schallwelle 40 die zweite Frequenz 24 herangezogen. Die erste Amplitude A₁ ist hierbei kleiner als die zweite Amplitude A₂. Sofern die Amplitude A zwischen der ersten Amplitude A₁ und der zweiten Amplitude A₂ liegt, wird eine zwischen der ersten und zweiten Frequenz 30,24 liegende Frequenz als Schaltfrequenz fₛ herangezogen. Mit anderen Worten ist die Schaltfrequenz fₛ invers proportional zu der Amplitude A der Schallwelle 40.

Sofern - wie in Fig. 4 dargestellt - die Soll-Drehzahl 46 als externer Parameter 48 herangezogen wird, wird bei einer ersten Drehzahl 60 die erste Schaltfrequenz 30 und bei einer zweiten Drehzahl 62 die zweite Schaltfrequenz 24 als Schaltfrequenz f_{S} herangezogen, wobei die erste Drehzahl kleiner als die zweite Drehzahl ist. Hierbei wird beispielsweise die Schaltfrequenz f_{S} mittels einer Stufe 64 im Wesentlichen schlagartig angepasst. In einem sechsten Arbeitsschritt 66 werden die Halbleiterschalter 16 mittels der Steuereinheit 18 mit der im fünften Arbeitsschritt ermittelten Schaltfrequenz f_{S} angesteuert. Hieran anschließend wird erneut der erste Arbeitsschritt 34 ausgeführt.

### Bezugszeichenliste

- 2: elektrische Maschine
- 4: Umrichter
- 6: Leitung
- 8: Brückenzweig
- 10: positiver Pol
- 12: negativer Pol
- 14: Zwischenkreiskondensator
- 16: Halbleiterschalter
- 18: Steuereinheit
- 20: Sensor
- 22: Spannungssignal
- 24: zweite Schaltfrequenz
- 26: Zeitspanne
- 28: elektrischer Spannungsverlauf
- 30: erste Schaltfrequenz
- 32: Verfahren
- 34: erster Arbeitsschritt
- 36: Umgebungsparameter
- 38: Frequenzspektrum
- 38a: erstes Frequenzspektrum
- 38b: zweites Frequenzspektrum
- 38c: drittes Frequenzspektrum
- 40: Schallwelle
- 42: zweiter Arbeitsschritt
- 44: Mittelwert
- 46: Soll-Drehzahl
- 48: Rampenfunktion
- 50: dritter Arbeitsschritt
- 52: Grenzwert
- 54: vierter Arbeitsschritt
- 56: fünfter Arbeitsschritt
- 58: externer Parameter
- 60: erste Drehzahl
- 62: zweite Drehzahl
- 64: Stufe
- 66: sechster Arbeitsschritt

- A: Amplitude
- A₁: erste Amplitude
- A₂: zweite Amplitude
- A₃: dritte Amplitude
- U: Gleichspannung

- f: Frequenz
- f_{G}: Grenzfrequenz
- f_{S}: Schaltfrequenz
- n: Drehzahl

## Patentansprüche

1. Verfahren (32) zum Betrieb eines Umrichters (4), dessen Halbleiterschalter (16) zur Ausgabe eines elektrischen Spannungs- oder Stromsignals (22) mit einer Schalfrequenz (fs) beaufschlagt wird,
- wobei die Schaltfrequenz (fs) abhängig von einem externen Parameter (58) gewählt wird,
- wobei eine erste Schaltfrequenz (30) oder eine zweite Schaltfrequenz (24) gewählt wird,
- wobei die erste Schaltfrequenz (30) größer als die zweite Schaltfrequenz (24) ist,
- wobei bei Überschreiten einer Umgebungstemperatur oder, wenn eine Leistungsanforderung an den Umrichter (4) eine bestimmte vorgegebene Leistungsanforderung überschreitet, die Anpassung der Schaltfrequenz (fs) an den externen Parameter (58) beendet wird,
- wobei als externer Parameter (58) eine Drehzahl (n) einer mittels des Umrichters (4) angetriebenen elektrischen Maschine (2) herangezogen wird, wobei bei einer ersten Drehzahl (60) die erste Schaltfrequenz (30) und bei einer zweiten Drehzahl (62) die zweite Schaltfrequenz (24) gewählt wird, wobei die erste Drehzahl (60) kleiner als die zweite Drehzahl (62) ist,
- oder wobei als externer Parameter (58) eine Amplitude (A) einer Schallwelle (40) herangezogen wird, wobei bei einer ersten Amplitude (A₁) die erste Schaltfrequenz (30) und bei einer zweiten Amplitude (A₂) die zweite Schaltfrequenz (24) gewählt wird, wobei die erste Amplitude (A₁) kleiner als die zweite Amplitude (A2) ist.

2. Verfahren (32) nach Anspruch 1,
**dadurch gekennzeichnet,**
**dass** die Schalfrequenz (fs) kontinuierlich angepasst wird.

3. Verfahren (32) nach Anspruch 1 oder 2,
**dadurch gekennzeichnet,**
**dass** als externer Parameter (58) ein Mittelwert (44) der jeweiligen Größe herangezogen wird.

4. System mit einem Umrichter (4) und einem Sensor (20),
- wobei der Sensor (20) einen externen Parameter (58) bestimmt,
- wobei als externer Parameter (58) eine Drehzahl (n) einer mittels des Umrichters (4) angetriebenen elektrischen Maschine (2) oder eine Amplitude (A) einer Schallwelle (40) herangezogen wird, und
- wobei der Umrichter (4) einen Halbleiterschalter (16) aufweist, der gemäß einem Verfahren (32) nach einem der Ansprüche 1 bis 3 betrieben ist.

## Claims

1. Method (32) for operating an inverter (4), to whose semiconductor switch (16) a switching frequency (fs) is applied for outputting an electrical voltage or current signal (22),
- wherein the switching frequency (fs) is selected depending on an external parameter (58),
- wherein a first switching frequency (30) or a second switching frequency (24) is selected,
- wherein the first switching frequency (30) is greater than the second switching frequency (24),
- wherein, when an ambient temperature is exceeded or when a power demand on the inverter exceeds a certain predetermined power demand, the adjustment of the switching frequency (fs) to the external parameter (58) is terminated,
- wherein a rotational speed (n) of an electric machine (2) driven by means of the inverter (4) is used as an external parameter (58), wherein the first switching frequency (30) is selected for a first rotational speed (60) and the second switching frequency (24) is selected for a second rotational speed (62), wherein the first rotational speed (60) is smaller than the second rotational speed (62),
- or wherein an amplitude (A) of a sound wave (40) is used as an external parameter (58), wherein the first switching frequency (30) is selected at a first amplitude (A₁) and the second switching frequency (24) is selected at a second amplitude (A₂), wherein the first amplitude (A₁) is smaller than the second amplitude (A₂).

2. Method (32) according to claim 1,
**characterized in**
**that** the switching frequency (fs) is continuously adjusted.

3. Method (32) according to claim 1 or 2,
**characterized in**
**in that** an average value (44) of the respective variable is used as an external parameter (58).

4. System with an inverter (4) and a sensor (20),
- wherein the sensor (20) determines an external parameter (58),
- wherein a rotational speed (n) of an electric machine (2) driven by means of the inverter (4) or an amplitude (A) of a sound wave (40) is used as an external parameter (58), and
- wherein the converter (4) comprises a semiconductor switch (16) operated according to a method (32) according to one of claims 1 to 3.

## Revendications

1. Procédé (32) pour faire fonctionner un convertisseur (4), dont le commutateur à semi-conducteurs (16) est alimenté par une fréquence de commutation (fs) pour délivrer un signal électrique de tension ou de courant (22),
- dans lequel la fréquence de commutation (fs) est choisie en fonction d'un paramètre externe (58),
- dans lequel une première fréquence de commutation (30) ou une deuxième fréquence de commutation (24) est sélectionnée,
- dans lequel la première fréquence de commutation (30) est supérieure à la deuxième fréquence de commutation (24),
- dans lequel l'adaptation de la fréquence de commutation (fs) au paramètre externe (58) est terminée en cas de dépassement d'une température ambiante ou lorsqu'une demande de puissance adressée au convertisseur dépasse une certaine demande de puissance prédéfinie,
- dans lequel une vitesse de rotation (n) d'une machine électrique (2) entraînée au moyen du convertisseur (4) est utilisée comme paramètre externe (58), dans lequel la première fréquence de commutation (30) est choisie pour une première vitesse de rotation (60) et la deuxième fréquence de commutation (24) est choisie pour une deuxième vitesse de rotation (62), dans lequel la première vitesse de rotation (60) est inférieure à la deuxième vitesse de rotation (62),
- ou dans lequel une amplitude (A) d'une onde sonore (40) est utilisée comme paramètre externe (58), dans lequel la première fréquence de commutation (30) pour une première amplitude (A₁) et la deuxième fréquence de commutation (24) est choisie pour une deuxième amplitude (A₂), dans lequel la première amplitude (A₁) est inférieure à la deuxième amplitude (A₂).

2. Procédé (32) selon la revendication 1,
**caractérisé en ce**
**que** la fréquence de commutation (fs) est adaptée en continu.

3. Procédé (32) selon la revendication 1 ou 2,
**caractérisé en ce**
**que** une valeur moyenne (44) de la grandeur respective est utilisée comme paramètre externe (58).

4. Système comprenant un convertisseur (4) et un capteur (20),
- dans lequel le capteur (20) détermine un paramètre externe (58),
- dans lequel une vitesse de rotation (n) d'une machine électrique (2) entraînée au moyen du convertisseur (4) ou une amplitude (A) d'une onde sonore (40) est utilisée comme paramètre externe (58), et
- dans lequel le convertisseur (4) comprend un commutateur à semi-conducteurs (16) fonctionnant selon un procédé (32) selon l'une des revendications 1 à 3.
